# EUROPÄISCHE PATENTSCHRIFT

(11) **EP 1 616 156 B1**
(45) Veröffentlichungstag und Bekanntmachung des Hinweises auf die Patenterteilung: **14.06.2017**
(21) Anmeldenummer: 04728522.6
(22) Anmeldetag: 21.04.2004
(51) Int. Cl.: G01F 23/296, G01N 9/00, B06B 1/06

(54) **VORRICHTUNG ZUR BESTIMMUNG UND/ODER ÜBERWACHUNG MINDESTENS EINER PHYSIKALISCHEN ODER CHEMISCHEN PROZESSGRÖSSE EINES MEDIUMS IN EINEM BEHÄLTER**
DEVICE FOR DETERMINING AND/OR MONITORING AT LEAST ONE PHYSICAL OR CHEMICAL PROCESS VARIABLE OF A MEDIUM IN A CONTAINER
DISPOSITIF POUR DETERMINER ET/OU CONTROLER AU MOINS UNE GRANDEUR DE PROCESSUS PHYSIQUE OU CHIMIQUE D'UN FLUIDE A L'INTERIEUR D'UN CONTENANT

(30) Priorität: 24.04.2003 DE 10318705
(43) Veröffentlichungstag der Anmeldung: 18.01.2006
(73) Patentinhaber: Endress + Hauser GmbH + Co. KG, 79689 Maulburg (DE)
(72) Erfinder: LOPATIN, Sergej, 79540 Lörrach (DE); PFEIFFER, Helmut, 79585 Steinen (DE)
(74) Vertreter: Andres, Angelika Maria
(86) Internationale Anmeldenummer: PCT/EP2004/004183
(87) Internationale Veröffentlichungsnummer: WO 2004/094964

(56) Entgegenhaltungen:
- EP-A- 0 499 265
- EP-A- 0 875 739
- DE-A- 3 734 077
- DE-A- 3 912 038
- DE-A- 10 260 088

## Beschreibung

Die Erfindung bezieht sich auf eine Vorrichtung zur Bestimmung und/oder Überwachung mindestens einer physikalischen oder chemischen Prozessgröße eines Mediums mit mindestens einer mechanisch schwingfähigen Einheit, die aus einer Röhre und einem inneren Schwinger besteht, wobei die Röhre mit einem vom Prozess abgewandten Ende mit einer Befestigungseinheit verbunden ist, wobei das dem Prozess zugewandte Ende der Röhre als freies Ende ausgebildet ist, wobei die Röhre den inneren Schwinger umgibt, und wobei der innere Schwinger mit einem dem Prozess zugewandten Ende an dem dem Prozess zugewandten Ende der Röhre befestigt ist, und mit mindestens einer Antriebs-/Empfangseinheit, wobei die Antriebs-/Empfangseinheit die mechanisch schwingfähige Einheit zu Schwingungen anregt, bzw. wobei die Antriebs-/Empfangseinheit die Schwingungen der mechanisch schwingfähigen Einheit empfängt. Bei der Prozessgröße handelt es sich beispielsweise um den Füllstand, um die Viskosität oder um die Dichte eines Mediums. Das Medium kann dabei eine Flüssigkeit oder ein beliebiges sonstiges Schüttgut sein.

Das Patent DE 692 02 354 T2 beschreibt einen Pegelsensor des Vibratortyps. Eine Erfassungsröhreneinheit ist mit einem Ende als festes Ende an einer Befestigungseinheit befestigt und am anderen Ende mit einer Endkappe verschlossen. An dieser Endkappe und in der Röhreneinheit ist ein inneres Vibrationsteil befestigt. Das Vibrationsteil weist eine längliche rechteckige Stabform auf. An einer Seitenfläche dieses Vibrationsteils ist eine vibrierende Einrichtung befestigt. Die Erfassungsröhre, die Endkappe und das innere Vibrationsteil bilden zusammen einen Faltausleger. In der Endkappe ist eine Erfassungseinrichtung angebracht, die Änderungen der Vibration des Faltauslegers erfasst. Für eine möglichst optimale Ausgangsspannung der Erfassungseinheit sollte laut der Patentschrift das Längenverhältnis zwischen der Länge der Röhre und der Länge des Vibrationsteils zwischen 1.6 und 3.0 liegen. Ist die Röhreneinheit über eine Membran an der Befestigungseinheit befestigt, so lässt sich ein Vibrationsknoten des Faltauslegers zu der Befestigungseinheit hin bewegen. Dies ermöglicht es, eine kürzere Länge der Röhreneinheit zu benutzen. Mit einer Membran sollte das Längenverhältnis zwischen der Länge der Röhre und der Länge des Vibrationsteils zwischen 1.0 und 2.5 liegen. Ein Nachteil dieses Faltauslegers ist, dass die Länge des Sensors sehr groß ist. Dies kommt daher, dass die Schwingfrequenz des Faltauslegers durch die Masse und durch die Länge des inneren Vibrationsteils bestimmt wird. Um die Schwingfrequenz zu vermindern, muss das innere Vibrationsteil möglichst lang sein. Eine solche Reduzierung der Schwingfrequenz hat den allgemeinen Vorteil, dass sich damit größere Amplituden erreichen lassen und dass dadurch der Sensor eine höhere Anwendungsbreite besitzt. Gleichzeitig zum langen inneren Vibrationsteil ist in den meisten Fällen eine noch größere Länge der Röhre erforderlich. Dieses Längenverhältnis verhindert, dass Schwingungsenergie vom Faltausleger auf den Behälter übertragen wird. Somit ergibt sich eine große Länge des Sensors. Die Membran an der Befestigungseinheit ist eine Möglichkeit der Verkürzung der Länge. Es ist jedoch aus dem Patent DE 37 40 598 C2 zu entnehmen, dass mechanische Fertigungstoleranzen dazu führen, dass der Schwingungsknoten nicht genau an der Membranbefestigung angreift. Somit kann auch hier Energieverlust auftreten. Weiterhin schränkt eine solche Membran mit der Bedingung, dass sich an der Membranbefestigung Schwingungsknoten befinden, die Wahl der Frequenzen der Schwingungen ein. Ein weiterer Nachteil des Patents DE 692 02 354 T2 ist, dass das innere Vibrationsteil eine spezielle Geometrie erfordert, die mit der Anbringung und Ausgestaltung der vibrierenden Einrichtung zusammenhängt. Weiterhin ist neben der vibrierenden Einrichtung für die Anregung noch eine Erfassungseinrichtung für den Empfang erforderlich.

Aus der DE0391238A1 ist ebenfalls ein Pegelsensor des Vibrationstyps mit einem inneren und einem äußeren Schwinger bekannt geworden. Das mechanische Schwingungsgebilde umfasst zwei Membranen und zwei jeweils im Zentrum einer der Membranen angeordnete Schwingungselemente, die wiederum jeweils einen Stab und einen Massekörper aufweisen. Um eine Füllstandsbestimmung unabhängig von Betriebsbedingungen, wie beispielsweise einer möglichen Ansatzbildung, oder die Art der Schwingungserregung, zu ermöglichen, sind die beiden Schwingungselemente an den einander zugewandten Seiten der Massekörper durch eine Feder gekoppelt, die senkrecht zur Achsrichtung der Schwingungselemente eine größere Steifigkeit aufweist, als parallel dazu.

Aufgabe der Erfindung ist es, eine physikalische oder chemische Prozessgröße eines Mediums zu bestimmen und/oder zu überwachen mit einer mechanisch schwingfähigen Einheit und einer Antriebs-/Empfangseinheit, wobei die Messgenauigkeit möglichst groß ist.

Die Aufgabe wird erfindungsgemäß dadurch gelöst, dass der innere Schwinger mindestens eine Nut oder eine Nut in Kombination mit einer Verjüngung aufweist, die mindestens die Schwingfrequenz der mechanisch schwingfähigen Einheit bestimmt.

Im Wesentlichen hängt die Schwingfrequenz ab vom Massenträgheitsmoment des inneren Schwingers bezogen auf die Drehachse in der Nut oder eine Nut in Kombination mit einer Verjüngung. Weitere Abhängigkeiten ergeben sich von der Biegesteifigkeit des bezeichneten Abschnitts des inneren Schwingers mit Nut oder eine Nut in Kombination mit einer Verjüngung und von dem Massenträgheitsmoment der Röhre bezogen auf die Drehachse in der Einspannung der Befestigungseinheit. Gering beteiligt an der Schwingfrequenz ist noch die Drehsteifigkeit des Bereichs der Befestigungseinheit, an dem die Röhre befestigt ist. Beispielsweise durch den Durchmesser und/oder die Länge der Nut bzw. der Nut in Kombination mit der Verjüngung ist die Drehsteifigkeit für den inneren Schwinger definiert. Je nach Ausgestaltung ist auch die Masse des inneren Schwingers betroffen. Dies ist ggf. bei der weiteren Ausgestaltung des inneren Schwingers zu beachten. Da die Drehsteifigkeit u.a. die Schwingfrequenz mitbestimmt, kann über die Ausgestaltung und/oder die Position der Nut/Verjüngung die Arbeitsfrequenz passend eingestellt werden. Somit kann über die Dimensionierung und/oder die Position der Nut, bzw. der Nut in Kombination mit der Verjüngung die Schwingfrequenz reduziert werden, wodurch die Amplitude der Schwingung zunimmt. Für die weitere, feinere Festlegung der Schwingfrequenz bzw. der Amplitude ist auch - wie oben bereits angemerkt - die weitere Ausgestaltung relevant. Bei der Variante der Ausgestaltung als Nut ist der Vorteil, dass der innere Schwinger als Drehteil ausgebildet ist, was kostensparend ist. Die Nut oder Nut in Kombination mit der Verjüngung ist bevorzugt rotationssymmetrisch ausgeführt, so dass u.a. keine Unwucht auftritt. Weiterhin sollte auch beachtet werden, dass der innere Schwinger durch die Nut oder eine Nut in Kombination mit einer Verjüngung immer noch so stabil ist, dass sich durch die Schwingung keine Verformung o.ä. ergeben kann.

Eine vorteilhafte Ausgestaltung sieht vor, dass sich die Nut oder eine Nut in Kombination mit einer Verjüngung in Richtung des dem Prozess zugewandten Endes des inneren Schwingers befindet. Die Nut oder eine Nut in Kombination mit einer Verjüngung befindet sich also optimal zwischen dem Übergang zwischen der Röhre und dem inneren Schwinger. Auf diese Weise ist die träge Masse des inneren Schwingers oberhalb der Nut oder eine Nut in Kombination mit einer Verjüngung am größten. Weiterhin ist dies der Punkt, an dem die Kräfte wirken und wo sich also auch die Drehsteifigkeit auswirkt. Die Positionierung der Nut oder eine Nut in Kombination mit einer Verjüngung hängt jedoch auch von der Position und Ausgestaltung der Antriebs-/Empfangseinheit ab, so dass die Antriebs-/Empfangseinheit optimal wirken, bzw. optimal empfangen kann bzw. dass möglichst keine destruktiven Kräfte und Momente auf den inneren Schwinger wirken.

Während der Schwingbewegung übertragen die schwingenden Teile (Röhre und innerer Schwinger) Kräfte und Drehmomente, die von der Befestigungseinheit als Reaktionskräfte und -momente aufgenommen werden. Die Befestigungseinheit oder Basiseinheit ist direkt oder ggf. über ein weiteres Element mit dem Behälter verbunden, in dem sich das Medium befindet. Um die Kopplung zum Behälter und somit den möglichen Energieverlust zu vermeiden, muss dafür gesorgt werden, dass die mechanisch schwingfähige Einheit im energetischen Gleichgewicht steht. Das bedeutet, dass die Summe der Kräfte und Drehmomente, die während der Schwingbewegung von den Einzelkomponenten erzeugt werden, in der Befestigungseinheit im Wesentlichen Null sind.

Eine vorteilhafte Ausgestaltung beinhaltet, dass ein zusätzliches Gewicht in der Befestigungseinheit vorgesehen ist. Mit dieser Ausgestaltung wird die mechanisch schwingfähige Einheit bezüglich einer Übertragung von Schwingungsenergie im Wesentlichen von der Befestigungseinheit entkoppelt. Weiterhin hat das Gewicht auch den Nutzen, die Einspannung schwingungstechnisch stabiler zu machen.

Vorteilhafte Ausgestaltungen sehen vor, dass die Röhre und/oder der innere Schwinger einen runden, elliptischen, quadratischen oder polygonalen Querschnitt aufweist. Für die Geometrie gibt es also kaum Vorgaben oder Grenzen. Ein runder Querschnitt der Röhre hat den Vorteil, das die Gefahr reduziert wird, dass die mechanisch schwingfähige Einheit durch das Material verbogen werden kann. Damit lässt sich auch ein Einbau an einer beliebigen Stelle im Behälter des Mediums realisieren. Weiterhin ist bei einem runden Querschnitt die Herstellung einfach und preisgünstig.

Vorteilhafte Ausgestaltungen sehen vor, dass der innere Schwinger hohl, massiv oder teilweise hohl und teilweise massiv ist. Es sollte gewährleistet sein, dass der innere Schwinger trotz der Nut, bzw. der Verjüngung in diesem Bereich stabil genug ist, d.h. er darf durch die Schwingungen nicht abbrechen. Da für den inneren Schwinger die Masse eine wichtige Rolle spielt, ist es sinnvoll, ihn als Vollmaterial auszugestalten. Bei einer hohlen Röhre würde die Schwingfrequenz erhöht werden. Dadurch ergibt sich natürlich wieder eine Möglichkeit, die Schwingfrequenz einzustellen.

Eine vorteilhafte Ausgestaltung beinhaltet, dass in der Antriebs-/Empfangseinheit nur eine einzige Piezoeinheit vorgesehen ist, die als Antriebs- und als Empfangseinheit dient. Eine andere Ausgestaltung beinhaltet, dass in der Antriebs-/Empfangseinheit mindestens zwei Piezoeinheiten vorgesehen sind, wobei mindestens eine Piezoeinheit als Antriebseinheit und mindestens eine Piezoeinheit als Empfangseinheit dient, wobei die Piezoeinheiten an der gleichen Position positioniert sind. Dies ermöglicht, den Einbau der Piezoeinheit und die Konstruktion von Röhre, innerem Schwinger und anderen möglichen Fixierelementen deutlich zu vereinfachen. Dies vereinfacht auch die Verkabelung der Piezoeinheit. Weitere Vorteile bei der Verwendung nur einer Einheit liegen in den geringeren Herstellungskosten. Ein weiterer Vorteil ist, dass eine vom Schwinger unabhängige Baugruppe hergestellt wird, die vor dem Einbau geprüft und getestet werden kann, was in der Produktion immer erwünscht ist. Die Piezoeinheiten sind üblicherweise eingespannt. Bei einer solchen Piezoeinheit ist es auch u.a. für die Effektivität bedeutend, dass der innere Schwinger möglichst mit der ganzen Oberfläche der Piezoeinheiten verbunden ist, dass also z.B. die Nut oder eine Nut in Kombination mit einer Verjüngung nicht direkt auf der Piezoeinheit sitzt, die einen deutlich größeren Durchmesser aufweist. Diese und ähnliche Erwägungen für die Ausgestaltung liegen der fachlich qualifizierten Person nahe und hängen stark von der Art und den detaillierten Bedingungen der konkreten Realisierung ab.

Eine ganz besonders vorteilhafte Ausgestaltung beinhaltet, dass es sich bei der Piezoeinheit um ein piezo-elektrisches Element handelt, das aus mindestens zwei Segmenten besteht, die in einander entgegengesetzter Richtung polarisiert sind, wobei die Polarisationsrichtungen parallel zu einer Rotationsachse der mechanisch schwingfähigen Einheit liegen. Wird eine Spannung an die Ober- und Unterseite dieser Piezoeinheit gelegt, so zieht sich das eine Segment zusammen und das andere Segment dehnt sich aus, d.h. das eine Segment hat eine geringere, das andere eine größere Höhe. Diese spezielle Piezoeinheit hat somit den großen Vorteil, dass sich direkte Kippbewegungen, bzw. Drehbewegungen erzeugen, bzw. detektieren lassen.

Eine Ausgestaltung sieht vor, dass die Antriebs-/Empfangseinheit zwischen dem dem Prozess zugewandten Ende des inneren Schwingers und dem dem Prozess zugewandten Ende der Röhre positioniert ist. Diese Positionierung in Verbindung mit der besonders ausgestalteten Piezoeinheit dient dazu, dass die mechanisch schwingfähige Einheit zu direkten Kippbewegungen, bzw. zu Drehbewegungen angeregt wird, bzw. dass Schwingungen, die aus solchen Bewegungen bestehen, empfangen werden. Weitere Vorteile sind, dass es sich um einfach und leicht zu montierende Einzelteile handelt, dass eine direkte und starre Kopplung mit dem Schwinger erzeugt wird, und dass axiale Bewegungen, z.B. Störungen, aufgrund der verschiedenen Polarisationsrichtungen der Piezoeinheit nicht empfangen werden. Weiterhin handelt es sich um eine preisgünstige Lösung, da weniger Einzelteile benötigt werden.

Eine Ausgestaltung sieht vor, dass der inneren Schwinger mindestens eine zweite Nut/Verjüngung aufweist. Damit verbunden ist eine Ausgestaltung, die beinhaltet, dass die Antriebs-/Empfangseinheit zwischen der ersten Nut/Verjüngung und der zweiten Nut/Verjüngung positioniert ist. Die erste Nut oder eine Nut in Kombination mit einer Verjüngung befindet sich dabei sehr nah an der Endkappe, also am Ende des dem Prozess zugewandten Endes des inneren Schwingers und auch der Röhre. Die Antriebs-/Empfangseinheit befindet sich auch möglichst nah an diesem Ende, bzw. nah an der Fixierung des inneren Schwingers, so dass eine optimale Ausnutzung der Schwingungsenergie erfolgen kann. Um die direkten Kippbewegungen zu erhalten, ist dafür auch die Piezoeinheit mit den entgegengerichteten Polarisationen sehr effektiv. Dieser Aufbau erhöht die Messempfindlichkeit des Sensors.

Die Erfindung wird anhand der nachfolgenden Zeichnungen näher erläutert. Es zeigt:
- Fig. 1:: einen Querschnitt durch eine Realisierung der Vorrichtung;
- Fig. 2:: eine schematische Verdeutlichung der Schwingungen und der auftretenden Kräfte; und
- Fig. 3:: einen Querschnitt durch eine weitere Realisierung der Vorrichtung.

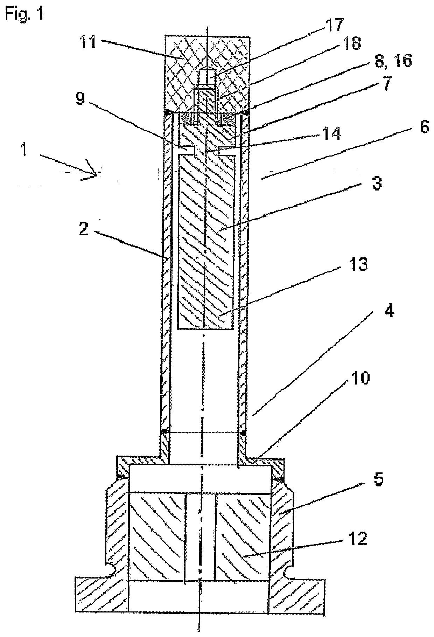

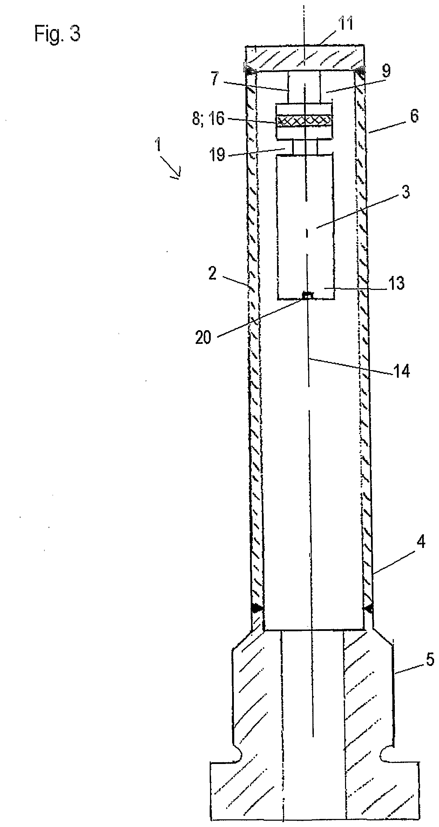

Fig. 1 zeigt einen Querschnitt durch eine Realisierung der Vorrichtung. Die mechanisch schwingfähige Einheit 1 besteht aus einer Röhre 2 und einem inneren Schwinger 3. Die Röhre 2 verfügt über zwei Enden. Das eine ist dem Prozess zugewandt 6, das andere ist vom Prozess abgewandt 4. Mit dem vom Prozess abgewandten Ende 4 ist die Röhre 2 an einer Befestigungseinheit 5 befestigt. In dem hier gezeigten Fall ist das vom Prozess abgewandte Ende 4 in einem Einschraubstück 10 befestigt. Bei dem Einschraubstück 10 kann es sich auch um eine Membran in der Befestigungseinheit 5 handeln. Die Ausgestaltung der Membran 10 bestimmt dabei u.a. auch die Schwingfrequenz der mechanisch schwingfähigen Einheit 1. Eine Membran liegt dann vor, wenn der Durchmesser einer Befestigungsscheibe sehr viel größer ist als deren Dicke. Oder für eine Ringmembran sollte die Differenz des Außendurchmessers und Innendurchmessers sehr viel größer sein als die Dicke der Membran. Die Schwingfrequenz der mechanisch schwingfähigen Einheit 1 vermindert sich mit abnehmender Membrandicke. Gleichzeitig nimmt jedoch auch die Amplitude der Schwingung der mechanisch schwingfähigen Einheit 1 ab. Weiterhin ist in dieser Ausführung auch ein zusätzliches Gewicht 12 in der Befestigungseinheit 5 vorgesehen, das zum einen die Befestigungseinheit 5 stabiler macht und zum anderen zur Entkopplung der schwingfähigen Einheit 1 von der Befestigungseinheit 5 beiträgt. An dem dem Prozess zugewandten Ende 6 der Röhre 2 ist eine Endkappe 11 befestigt. In der Endkappe 11 ist eine Bohrung 17 vorgesehen, in die das Fixierelement 18 des dem Prozess zugewandten Endes 7 des inneren Schwingers 3 zur Verbindung des inneren Schwingers 3 mit der Röhre 2 eingebracht wird. Eine solche Schraubverbindung 17, 18 ermöglicht es z.B., den inneren Schwinger 3 auch bei einer sehr langen Röhre 2 am dem Prozess zugewandten Ende 6 der Röhre 2 leicht und umstandsreduziert zu fixieren. Eine längere Röhre 2 könnte z.B. für spezielle Medien erforderlich sein oder für spezielle Behälter. Zum Verschrauben ist es auch sinnvoll, das vom Prozess abgewandte Ende 13 des inneren Schwingers 3 mit einem Schlitz zu versehen, so dass z.B. das Einschrauben mittels eines Schraubendrehers möglich ist (siehe dazu auch Fig. 3). Die Antriebs-/Empfangseinheit 8, die die mechanisch schwingfähige Einheit 1 zu Schwingungen anregt, bzw. die Schwingungen der mechanisch schwingfähigen Einheit 1 empfängt, ist in dem Ausführungsbeispiel zwischen dem inneren Schwinger 3 und der Endkappe 11 an der Röhre 2 fixiert. Aufgrund der Fixierung des inneren Schwingers 3 über das Fixierelement 18 ist die Antriebs-/Empfangseinheit 8 in diesem Fall als Ring ausgebildet. Bei der Antriebs-/Empfangseinheit 8 handelt es sich bevorzugt um mindestens eine Piezoeinheit 16. Sind für Antrieb und Empfang unterschiedliche Piezoeinheiten 16 vorgesehen, so befindet sich auch diese Mehrzahl an Piezoeinheiten 16 an der gleichen Position, z.B. innerhalb eines Stapels. Eine piezoelektrische Einheit mit zwei einander entgegengesetzten Polarisationen kann an dieser Position direkte Kippschwingungen erzeugen. Beim inneren Schwinger 3 handelt es sich im dargestellten Fall um einen soliden Rundstab. Weitere Formen sind jedoch auch möglich. Der Schwinger 3 weist in Richtung des dem Prozess zugewandten Endes 7 eine Nut 9 auf. Eine Nut in Kombination mit einer Verjüngung wäre als Realisierung ebenfalls möglich. Die Nut 9 ist hier als rotationssymmetrisch vorgesehen. Andere Ausgestaltungen liegen der fachlich qualifizierten Person nahe. Besonders der Durchmesser und die Länge dieser Nut 9 bestimmen die Drehsteifigkeit Cᵢ des Abschnitts des inneren Schwingers 3 in diesem Nut-Bereich. Über diese Drehsteifigkeit Cᵢ und das Massenträgheitsmoment θᵢ des inneren Schwingers 3 ist wiederum die Resonanzfrequenz des inneren Schwingers 3 bestimmt. Somit hat die Dimensionierung der Nut 9 direkte Auswirkungen auf die Resonanzfrequenz des inneren Schwingers 3. Die Schwingfrequenz der mechanisch schwingfähigen Einheit 1 entspricht der Resonanzfrequenz des inneren Schwingers 3 im gekoppelten Zustand mit der Röhre 2. Zusätzlich wird diese Schwingfrequenz beeinflusst durch das Massenträgheitsmoment der Röhre 2 und deren Biegesteifigkeit. Dies allerdings nur gering, solange die Resonanzfrequenz der Röhre 2 sehr viel kleiner ist als die Resonanzfrequenz des inneren Schwingers 3. Somit ist es möglich, über die Nut 9 und/oder deren Position die Schwingfrequenz der mechanisch schwingfähigen Einheit 1 zu beeinflussen.

Die Grundidee der Erfindung besteht also darin, dass die Schwingfrequenz der mechanisch schwingfähigen Einheit 1 durch die Nut/Verjüngung 9 einstellbar ist. Eine kleinere Schwingfrequenz führt bei gleicher Anregungsenergie zu einer höheren Amplitude. Diese Nut oder eine Nut in Kombination mit einer Verjüngung ermöglicht somit, dass der innere Schwinger 3 kürzer ausgeführt werden kann. Relevante Größen bzgl. der Nut 9 sind dabei deren Ausgestaltung (Durchmesser, Länge) und deren Position am inneren Schwinger 3.

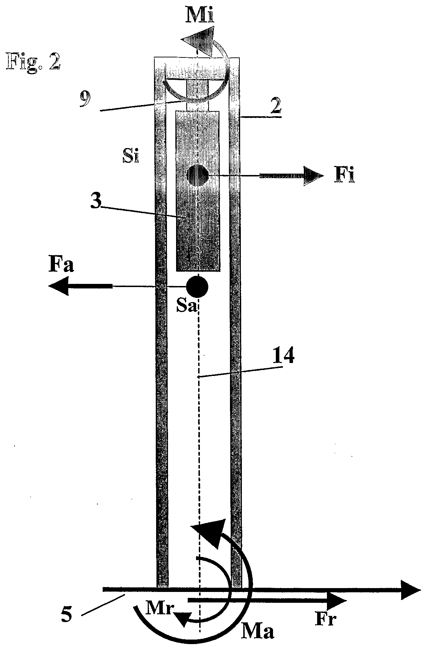

In Fig. 2 sind die wirkenden und auftretenden Kräfte und Momente der Fig. 1 detailliert dargestellt. Hierbei ist auch zu sehen, dass die Röhre 2 und der innere Schwinger 3 einander entgegengesetzt schwingen. Während der Schwingbewegung übertragen die schwingenden Teile 2, 3 Kräfte Fi, Fa und Drehmomente Mi und Ma, die von der Befestigungseinheit 5 als Reaktionskräfte Fr bzw. -momente Mr aufgenommen werden. Um eine Kopplung zum Behälter und somit Energieverlust bzw. eine Störung durch Schwingungen des Behälters zu vermeiden, muss dafür gesorgt werden, dass die mechanisch schwingfähige Einheit 1 im energetischen Gleichgewicht steht. Das bedeutet, dass die Summe der Kräfte und Drehmomente, die während der Schwingbewegung erzeugt werden, in der Befestigungseinheit 5 Null sein müssen. Die Forderungen sind, dass die an den Schwerpunkten des inneren Schwingers 3 Si und der Röhre 2 Sa wirkenden Kräfte Fi und Fa gleich groß sind: Fi = FA. Ebenfalls müssen die Drehmomente des inneren Schwingers Mi und der Röhre Ma gleich sein: Mi = Ma. Sind diese beiden Bedingungen nahezu erfüllt, werden nur zu vernachlässigende Kräfte Fr oder Momente Mr auf die Befestigungseinheit 5 übertragen und es kommt zu keinem nennenswerten Energieverlust der mechanisch schwingfähigen Einheit 1.

In Fig. 3 ist eine Ausgestaltung dargestellt, in der der innere Schwinger 3 eine Nut 19 und eine Verjüngung 9 aufweist. Die Antriebs-/Empfangseinheit 8, bzw. in diesem Falle die Piezoeinheit 16 mit den beiden Segmenten, deren Polarisation einander entgegengesetzt ist, befindet sich zwischen der Nut 19 und der Verjüngung 9. Durch die Ausgestaltung der Piezoeinheit 16 führt eine an die Piezoeinheit 16 angelegte Spannung dazu, dass sich das eine Segment der Piezoeinheit 16 zusammenzieht und dass sich das andere Segment ausdehnt. Somit wird direkt eine Kippbewegung erzeugt, über die sich die Schwingungen ergeben. Die Befestigungseinheit 5 ist hier solider als in Fig. 1 ausgeführt, bzw. das zusätzliche Gewicht 12 ist hier Teil der Befestigungseinheit 5. In dieser Abbildung ist auch die Einkerbung 20 im inneren Schwinger 3 zu sehen, über die der innere Schwinger 3 z.B. mit einem Schraubendreher in die Endkappe 11 der Röhre 2 eingeschraubt werden kann. Dies ist auch ein Beispiel für die sehr einfach zu montierende und somit auch kostengünstige Ausgestaltung der mechanisch schwingfähigen Einheit 1.

### Bezugszeichenliste

Mechanisch schwingfähige Einheit
- 1: Röhre
- 2: Innerer Schwinger
- 3: Vom Prozess abgewandtes Ende der Röhre
- 4: Befestigungseinheit
- 5: Dem Prozess zugewandtes Ende der Röhre
- 6: Dem Prozess zugewandtes Ende des inneren Schwingers
- 7: Antriebs-/Empfangseinheit
- 8: Nut
- 9: Einschraubstück Endkappe
- 10: Zusätzliches Gewicht
- 11: Vom Prozess abgewandtes Ende des inneren Schwingers
- 12: Rotationsachse

- 16: Piezoeinheit
- 17: Bohrung
- 18: Fixiereinheit
- 19: Verjüngung
- 20: Einkerbung

## Patentansprüche

1. Vorrichtung zur Bestimmung und/oder Überwachung mindestens einer physikalischen oder chemischen Prozessgröße eines in einem Prozess befindlichen Mediums,
wobei es sich bei der Prozessgröße um den Füllstand, die Dichte, oder die Viskosität des Mediums handelt,
mit mindestens einer mechanisch schwingfähigen Einheit (1),
die aus einer Röhre (2) und einem inneren Schwinger (3) besteht,
wobei die Röhre (2) mit einem vom Prozess abgewandten Ende (4) mit einer Befestigungseinheit (5) verbunden ist,
wobei das dem Prozess zugewandte Ende (6) der Röhre (2) als freies Ende ausgebildet und mit einer Endkappe (11) verschlossen ist,
wobei die Röhre (2) den inneren Schwinger (3) umgibt,
wobei der innere Schwinger (3) mit einem dem Prozess zugewandten Ende (7) mit dem dem Prozess zugewandten Ende (6) der Röhre (2) verbunden ist,
und
mit mindestens einer Antriebs-/Empfangseinheit (8),
wobei die Antriebs-/Empfangseinheit (8) zur Anregung der mechanisch schwingfähigen Einheit (1) zu Schwingungen dient, bzw.
wobei die Antriebs-/Empfangseinheit (8) zum Empfang der Schwingungen der mechanisch schwingfähigen Einheit (1) dient,
**dadurch gekennzeichnet,**
**dass** der innere Schwinger (3) mindestens eine Nut (9) oder eine Nut in Kombination mit einer Verjüngung (9,19) aufweist,
wobei sich die Nut (9) oder eine Nut in Kombination mit einer Verjüngung (9,19) näher zu der Verbindung zwischen dem inneren Schwinger (3) und der Röhre (2) als zu dem dem Prozess abgewandten Ende des inneren Schwingers (3) befindet,
und wobei über die Ausgestaltung und/oder Position der Nut (9) oder eine Nut in Kombination mit einer Verjüngung (9,19) die
Schwingfrequenz der mechanisch schwingfähigen Einheit (1) eingestellt wird.

2. Vorrichtung nach Anspruch 1,
**dadurch gekennzeichnet,**
**dass** die Röhre (2) und/oder der innere Schwinger (3) einen runden, elliptischen, quadratischen oder polygonalen Querschnitt aufweist.

3. Vorrichtung nach Anspruch 1 oder 2,
**dadurch gekennzeichnet,**
**dass** der innere Schwinger (3) hohl, massiv oder teilweise hohl und teilweise massiv ist.

4. Vorrichtung nach Anspruch 1,
**dadurch gekennzeichnet,**
**dass** in der Antriebs-/Empfangseinheit (8) nur eine einzige Piezoeinheit (16) vorgesehen ist, die als Antriebs- und als Empfangseinheit dient.

5. Vorrichtung nach Anspruch 4,
**dadurch gekennzeichnet,**
**dass** es sich bei der Piezoeinheit (16) um ein piezo-elektrisches Element handelt, das aus mindestens zwei Segmenten besteht, die in einander entgegengesetzter Richtung polarisiert sind, wobei die Polarisationsrichtungen parallel zu einer Rotationsachse (14) liegen, wobei die Rotationsachse (14) in Längsrichtung der Röhre liegt.

6. Vorrichtung nach Anspruch 1, 2, 4 oder 5
**dadurch gekennzeichnet,**
**dass** die Antriebs-/Empfangseinheit (8) zwischen dem dem Prozess zugewandten Ende (7) des inneren Schwingers (3) und dem dem Prozess zugewandten Ende (6) der Röhre (2) positioniert ist.

7. Vorrichtung nach Anspruch 1,2,4 oder 5
**dadurch gekennzeichnet,**
**dass** der inneren Schwinger (3) mindestens eine zweite Nut/Verjüngung (9, 19) aufweist.

8. Vorrichtung nach Anspruch 7,
**dadurch gekennzeichnet,**
**dass** die Antriebs-/Empfangseinheit (8) zwischen der ersten Nut (9) oder eine Nut in Kombination mit einer Verjüngung (9,19) und der zweiten Nut/Verjüngung (9, 19) positioniert ist.

9. Vorrichtung nach mindestens einem der vorherigen Ansprüche,
**dadurch gekennzeichnet,**
**dass** die Nut (9) oder eine Nut in Kombination mit einer Verjüngung (9,19) rotationssymmetrisch ist.

## Claims

1. Unit for determining and/or monitoring at least one physical or chemical process variable of a medium in a process,
wherein the process variable is the level, the density or the viscosity of the medium,
with at least one unit capable of mechanical vibration (1),
which consists of a tube (2) and an inner oscillator (3),
wherein the tube (2) is connected to a fastening unit (5) at an end (4) facing away from the process,
wherein the end (6) of the tube (2) facing towards the process is designed as a free end and is sealed by an end cap (11),
wherein the tube (2) surrounds the inner oscillator (3),
wherein the inner oscillator (3) is connected to the end (6) of the tube (2) that faces towards the process at an end (7) facing towards the process,
and
with at least one drive/reception unit (8),
wherein the drive/reception unit (8) is used to cause the unit capable of mechanical vibration (1) to vibrate, and/or
wherein the drive/reception unit (8) is used to receive the vibrations of the unit capable of mechanical vibration (1),
**characterized in that**
the inner oscillator (3) has at least one groove (9) or a groove in combination with a taper (9, 19),
wherein the groove (9) or a groove in combination with a taper (9, 19) is located closer to the connection between the inner oscillator (3) and the tube (2) than to the end of the inner oscillator (3) facing away from the process,
and wherein the vibration frequency of the unit capable of mechanical vibration (1) is set via the design and/or position of the groove (9) or a groove in combination with a taper (9, 19).

2. Unit as claimed in Claim 1,
**characterized in that**
the tube (2) and/or the inner oscillator (3) has a circular, elliptical, square or polygonal section.

3. Unit as claimed in Claim 1 or 2,
**characterized in that**
the inner oscillator (3) is hollow, solid or partially hollow and partially solid.

4. Unit as claimed in Claim 1,
**characterized in that**
the drive/reception unit (8) only contains one single piezo unit (16) which serves as the drive unit and the reception unit.

5. Unit as claimed in Claim 4,
**characterized in that**
the piezo unit (16) is a piezoelectric element which consists of at least two segments which are polarized in opposite directions, wherein the polarization directions are parallel to an axis of rotation (14), wherein the axis of rotation (14) is located in the longitudinal direction of the tube.

6. Unit as claimed in Claim 1, 2, 4 or 5,
**characterized in that**
the drive/reception unit (8) is positioned between the end (7) of the inner oscillator (3) facing towards the process and the end (6) of the tube (2) facing towards the process.

7. Unit as claimed in Claim 1, 2, 4 or 5,
**characterized in that**
the inner oscillator (3) has at least a second groove/taper (9, 19).

8. Unit as claimed in Claim 7,
**characterized in that**
the drive/reception unit (8) is positioned between the first groove (9) or a groove in combination with a taper (9, 19) and the second groove/taper (9, 19).

9. Unit as claimed in one of the previous claims,
**characterized in that**
the groove (9) or a groove in combination with a taper (9, 19) is rotationally symmetric.

## Revendications

1. Dispositif destiné à la détermination et/ou la surveillance d'au moins d'une grandeur process physique ou chimique dans un produit se trouvant dans un process,
pour lequel il s'agit, concernant la grandeur process, du niveau, de la densité ou de la viscosité du produit,
avec au moins une unité mécanique apte à vibrer (1),
qui est constituée d'un tube (2) et d'un vibreur (3),
le tube (2) étant relié par une extrémité (4) située à l'opposé du process avec une unité de fixation (5),
l'extrémité (6) faisant face au process du tube (2) étant conçue en tant qu'extrémité libre et fermée avec un embout (11),
le tube (2) entourant le vibreur intérieur (3),
le vibreur intérieur (3) étant relié par une extrémité (7) faisant face au process avec l'extrémité (6) située à l'opposé du process du tube (2),
et
avec au moins une unité d'entraînement / de réception (8),
l'unité d'entraînement / de réception (8) servant à l'excitation de l'unité mécanique apte à vibrer (1) en vibrations, et
l'unité d'entraînement / de réception (8) servant à la réception des vibrations de l'unité mécanique apte à vibrer (1),
**caractérisé**
**en ce que** le vibreur intérieur (3) présente au moins une rainure (9) ou une rainure en combinaison avec une diminution de section (9, 19),
la rainure (9) ou une rainure en combinaison avec une diminution de section (9, 19) se trouvant plus près de la jonction entre le vibreur intérieur (3) et le tube (2) que de l'extrémité située à l'opposé du process du vibreur intérieur (3), et la fréquence de vibration de l'unité mécanique apte à vibrer (1) étant réglée par le biais de la conception et/ou de la position de la rainure (9) ou d'une rainure en combinaison à une diminution de section (9, 19).

2. Dispositif selon la revendication 1,
**caractérisé**
**en ce que** le tube (2) et/ou le vibreur intérieur (3) présente une section circulaire, elliptique, quadratique ou polygonale.

3. Dispositif selon la revendication 1 ou 2,
**caractérisé**
**en ce que** le vibreur intérieur (3) est creux, massif ou partiellement creux et partiellement massif.

4. Dispositif selon la revendication 1,
**caractérisé**
**en ce qu'**est prévue, dans l'unité d'entraînement / de réception (8), une unique unité piézoélectrique (16), qui sert d'unité d'entraînement et de réception.

5. Dispositif selon la revendication 4,
**caractérisé**
**en ce qu'**il s'agit, concernant l'unité piézoélectrique (16), d'un élément piézoélectrique composé d'au moins deux segments, qui sont polarisés en direction opposée, les directions de polarisation étant parallèles à un axe de rotation (14), l'axe de rotation (14) se situant dans la direction longitudinale du tube.

6. Dispositif selon la revendication 1, 2, 4 ou 5,
**caractérisé**
**en ce que** l'unité d'entraînement / de réception (8) est positionnée entre l'extrémité (7) faisant face au process du vibreur intérieur (3) et l'extrémité (6) située à l'opposé du process du tube (2).

7. Dispositif selon la revendication 1, 2, 4 ou 5,
**caractérisé**
**en ce que** le vibreur intérieur (3) présente une deuxième rainure / diminution de section (9, 19).

8. Dispositif selon la revendication 7,
**caractérisé**
**en ce que** l'unité d'entraînement / de réception (8) est positionnée entre la première rainure (9) ou une rainure en combinaison avec une diminution de section (9, 19) et la deuxième rainure / diminution de section (9, 19).

9. Dispositif selon au moins l'une des revendications précédentes,
**caractérisé**
**en ce que** la rainure (9) ou une rainure en combinaison avec une diminution de section (9, 19) est à symétrie de révolution.
